**Europäisches Patentamt**

**European Patent Office**

**Office européen des brevets**

(19)

(11) Veröffentlichungsnummer: **0 060 318**
**B1**

(12) # EUROPÄISCHE PATENTSCHRIFT

(45) Veröffentlichungstag der Patentschrift:
**13.02.85**

(51) Int. Cl.⁴: **H 04 N 7/00,** H 04 Q 3/52,
H 04 Q 11/04

(21) Anmeldenummer: **81108183.5**

(22) Anmeldetag: **09.10.81**

(54) **Breitband-Vermittlungssystem.**

(30) Priorität: **12.03.81 DE 3109470**

(43) Veröffentlichungstag der Anmeldung:
**22.09.82 Patentblatt 82/38**

(45) Bekanntmachung des Hinweises auf die Patenterteilung:
**13.02.85 Patentblatt 85/7**

(84) Benannte Vertragsstaaten:
**AT BE CH FR GB IT LI NL SE**

(56) Entgegenhaltungen:
**EP - A - 0 028 416**
**DE - A - 2 944 794**

(73) Patentinhaber: **Siemens Aktiengesellschaft, Berlin und München Wittelsbacherplatz 2, D-8000 München 2 (DE)**

(72) Erfinder: **Barabas, Udo, Dr., Rolf-Pineggerstrasse 7, D-8000 München 21 (DE)**

## Beschreibung

Die Erfindung bezieht sich auf ein Breitband-Vermittlungssystem zum wahlweisen Verbinden von Breitbandsignalquellen mit breitbandsignalempfangenden Teilnehmern über eine Breitband-Koppelanordnung, in der die Koppelpunktschaltkreise, deren Funktion es ist, Eingangsleitungen mit Ausgangsleitungen der Koppelanordnung wahlweise zu verbinden, im Hinblick auf möglichst kleine Schaltzeiten bzw. auf die durchzuschaltenden, vorzugsweise pulsmodulierten Signale mit Signalfrequenzen von z. B. bis zu einigen hundert MHz durch in ECL-Technik realisierte Verknüpfungsglieder gebildet sein können (s. Pfannschmidt: »Arbeitsgeschwindigkeitsgrenzen von Koppelnetzwerken für Breitband-Digitalsignale«, Diss. TU Bswg. 1978; DE-AS 828 662).

Mit einer solchen Breitband-Koppelanordnung können z. B. Fernsehprogramme zu Teilnehmern, die solche Programme empfangen wollen, hin vermittelt werden, wie dies neuere Entwicklungen der Fernmeldetechnik mit sich bringen, die zu Breitbandkommunikationsnetzen mit durch Lichtwellenleiter gebildeten Teilnehmerleitungen führen, wobei sich in der Teilnehmerebene ein Sternnetz von Lichtwellenleitern mit einem Lichtwellenleiter je Wohnungseinheit als günstig erweist, der eine (zweckmäßigerweise mit der nächstgelegenen Fernsprech-Vermittlungsstelle räumlich vereinigte) Breitband-Vermittlungsstelle mit der Wohnung des Teilnehmers verbindet und über den alle Fernmeldedienste für die betreffende Wohneinheit abgewickelt werden, wobei für einen zukunftssicheren Wohnungsanschluß beispielsweise die Bereitstellung zumindest etwa folgender Kommunikationsmöglichkeiten in Frage kommt:

3 Fernsehkanäle für 3 Fernseh-Empfänger mit unabhängigem Zugriff zu allen von der Vermittlungsstelle erreichbaren Fernsehsignalquellen bzw. in der Vermittlungsstelle verfügbaren Fernsehprogrammen,
3 UKW-Hörfunkkanäle (Stereo),
Digital-Telefonie,
Bildschirmtext,
Bildfernsprechen
sowie Rückkanäle zur Programmauswahl und ggf. zur Abwicklung interaktiver Dienste.

Bei einer solchen Breitbandsignalvermittlung muß nicht nur mit ein und derselben Signalquelle gleichzeitig eine Vielzahl von Teilnehmeranschlüssen verbunden werden können, sondern es muß umgekehrt auch ein und derselbe Teilnehmeranschluß mit mehreren Signalquellen gleichzeitig verbunden werden können.

Hierzu kann man vorsehen, daß die (pulsmodulierten) Signale der einzelnen Signalquellen dem jeweiligen signalquellenindividuellen Eingang einer Breitband-Koppelanordnung mit Koppelpunktschaltkreisen in ECL-Technik jeweils im Zeitmultiplex in einer der Anzahl der gleichzeitig mit ein und demselben Teilnehmer verbindbaren Signalquellen entsprechenden Mehrzahl von Zeitkanälen eines zumindest diese Zeitkanäle umfassenden Zeitmultiplexsystem mehrfach zugeführt werden und in der Breitband-Koppelanordnung die teilnehmerindividuellen Aussgänge jeweils in teilnehmerindividuell bestimmten Zeitkanälen der genannten Mehrzahl von Zeitkanälen mit der jeweils gewünschten Signalquelle verbunden werden (siehe ältere europäische Patentanmeldung EP-A1-0 028 416, Veröffentlichungstag 7. 5. 1981 entspricht der älteren deutschen Patentanmeldung DE-A-2 944 784).

Über eine solche Breitband-Koppelanordnung, bei der die Koppelpunktschalter durch ECL-Verknüpfungsglieder realisiert sein können, können pulsmodulierte Signale, beispielsweise PPM-Signale, großer Bandbreite übertragen werden.

Für die Breitbandsignalvermittlung ist indessen nicht nur die Breitbandigkeit bzw. Schnelligkeit eines — bei Realisierung durch ECL-Verknüpfungsglieder noch Signalimpulsen mit in der Größenordnung von 1 ns liegenden Flankenanstiegs- bzw. -abfallzeiten folgenden — Koppelpunktschalters von Bedeutung, sondern auch dessen im (Sperrzustand des Koppelpunktschalters gegebene) Sperrdämpfung solcher Signalimpulse. Die Koppelpunktschalter haben nämlich nur eine begrenzte Sperrdämpfung — so können heutige ECL-Koppelpunktschalter für Signalbandbreiten von etwa hundert MHz eine Sperrdämpfung von etwa 40 dB aufweisen —, so daß es zu einem räumlichen Nebensprechen zwischen (räumlich benachbarten) Übertragungskanälen gleicher Zeitlage und ggf. auch zu einem zeitlichen Nebensprechen zwischen (gleiche Durchschaltewege benutzenden) Übertragungskanälen benachbarter Zeitlagen kommen kann. Bei einer Sperrdämpfung von etwa 40 dB kann das beispielsweise im Falle von Fernsehübertragungen zu einem sichtbaren Übersprechen zwischen Übertragungskanälen gleicher Zeitlage führen.

Solche Übersprecherscheinungen zu vermeiden oder zumindest auf ein nicht mehr störendes Maß zu begrenzen, zeigt nun die Erfindung einen Weg. Die Erfindung betrifft ein Breitband-Vermittlungssystem zum wahlweisen Verbinden von Breitbandsignalquellen, insbesondere TV-Programmquellen, mit breitbandsignalempfangenden Teilnehmern über eine Breitband-Koppelanordnung mit Koppelpunktschaltkreisen insbesondere in ECL-Technik, über die die Breitbandsignale, insbesondere TV-Signale, als pulsmodulierte Signale übertragen werden; dieses Breitband-Vermittlungssystem ist erfindungsgemäß dadurch gekennzeichnet, daß die Signale der einzelnen Signalquellen in einer der Anzahl der gleichzeitig mit ein und demselben Teilnehmer verbindbaren Signalquellen entsprechenden Mehrzahl von Zeitkanälen eines zumindest diese Zeitkanäle umfassenden Zeitmultiplexsystems zeitkanalindividuellen Eingängen in signalquellenindividuelle Koppelebenen der Breitband-Koppelanordnung zugeführt werden und in der Breitband-Koppelanordnung die eingangsseitig mit den einzelnen Eingängen der einzelnen Koppelebenen verbundenen Koppelpunktschalter ausgangsseitig über jeweils teilnehmerindividuell eine Mehrzahl von Koppelpunktschaltern einer Koppelebene zusammenfassende Schwellwert-Multiplex-Schaltungen mit von an einem Koppelpunktschalter gesperrten Signalen nicht überschreitbaren Schwellwert jeweils mit dem dem betreffenden Teilnehmer zugehörigen Ausgang der Breitband-Koppelanordnung verbunden sind.

Die sich die einer Schwellwertschaltung wie auch einem Verknüpfungsglied inhärente Amplitudenentscheidungsschwelle zunutze machende Erfindung bringt mit einer solchen Koppelfeldstruktur mit relativ geringem Aufwand den Vorteil mit sich, daß jeweils bei gesperrtem Koppelpunktschalter das betreffende Signal eine wesentlich erhöhte Sperrdämpfung, nämlich die kaskadierte Sperrdämpfung von Koppelpunktschalter und Schwellwert-Multiplex-Schaltung, erfährt, so daß ein Übersprechen zwischen Übertragungskanälen gleicher Zeitlage entsprechend unterdrückt wird; die Sperrdämpfung kann dabei auf den doppelten Wert von im Beispiel 80 dB angehoben sein, wenn in weiterer Ausgestaltung der Erfindung sowohl die Koppelpunktschalter als auch die Schwellwert-Multiplex-Schaltungen in ECL-Technik realisiert sind.

Dabei können in weiterer Ausgestaltung der Erfindung die Schwellwert-Multiplex-Schaltungen durch den Koppelpunktschaltern nachgeschaltete, ausgangsseitig vielfachgeschaltete Schwellwertschalter gebildet sein; in alternativer Ausgestaltung der Erfindung können die Schwellwert-Multiplex-Schaltungen aber auch durch Multiplex-Verknüpfungsglieder gebildet sein.

Um eine zusätzliche Reduzierung des Nebensprechens zwischen zeitlich benachbarten Übertragungskanälen zu erzielen, sind zweckmäßigerweise in weiterer Ausgestaltung der Erfindung allenfalls solche zu ein und demselben teilnehmerindividuellen Ausgang der Breitband-Koppelanordnung führende Koppelpunktschalter, die eingangsseitig mit in der Reihenfolge der zugehörigen Zeitkanäle nicht unmittelbar benachbarten Eingängen der Breitband-Koppelanordnung verbunden sind, mit ein und demselben Eingang einer Schwellwert-Multiplex-Schaltung verbunden.

Zu der erwähnten Mehrfachzuführung eines Breitbandsignals zu zeitkanalindividuellen Eingängen der signalquellenindividuellen Koppelebene wird zweckmäßigerweise in weiterer Ausgestaltung der Erfindung die Signalquelle mit einer der Mehrzahl von Zeitkanälen entsprechenden Häufigkeit abgetastet, und es werden die die Abtastwerte darstellenden pulsmodulierten Signale jeweils dem zugehörigen zeitkanalindividuellen Eingang der jeweiligen Koppelebene zugeführt.

In alternativer Ausgestaltung der Erfindung kann man aber auch die Signalquelle mit einer lediglich einem Zeitkanal entsprechenden Abtastrate abtasten und das den jeweils erhaltenen Abtastwert darstellende pulsmodulierte Signal auf eine der Mehrzahl der Zeitkanäle entsprechende Mehrzahl von Leitungspfaden auffächern, in denen sich stufenweise jeweils um die Dauer eines Zeitfaches unterscheidende Verzögerungen stattfinden und die ausgangsseitig zu dem jeweils zugehörigen zeitkanalindividuellen Eingang der jeweiligen Koppelebene führen.

In beiden Fällen ist es zweckmäßig, daß in weiterer Ausgestaltung der Erfindung zur Verbindung der einzelnen Eingänge der Breitband-Koppelanordnung mit den dem jeweiligen Eingang zugehörigen, zu den verschiedenen Ausgängen der Breitband-Koppelanordnung führenden Koppelpunktschaltern ständig entriegelte ECL-Verknüpfungsglieder mit einer Mehrzahl von Ausgängen vorgesehen sind, wobei Koppelpunktschalter, bei denen die Breitbandsignale in den genannten, den Koppelpunktschaltern in Kettenschaltung vorgeschalteten ECL-Verknüpfungsgliedern $2n-2$ Negationen erfahren haben, einerseits und Koppelpunktschalter, bei denen die Breitbandsignale in den genannten, den Koppelpunktschaltern in Kettenschaltung vorgeschalteten ECL-Verknüpfungsgliedern $2n-1$ Negationen erfahren haben, andererseits durch ECL-Verknüpfungsglieder mit bezüglich der pulsmodulierten Breitbandsignale miteinander vertauschter Verknüpfungsfunktion gebildet sind, insbesondere durch UND-Glieder und NOR-Glieder.

Anhand der Zeichnungen sei die Erfindung noch näher erläutert. Dabei zeigt

Fig. 1 ein Ausführungsbeispiel für ein Breitband-Vermittlungssystem gemäß der Erfindung,

Fig. 2 verdeutlicht die Lage der Zeitkanäle in einem Zeitmultiplexrahmen,

Fig. 3 und Fig. 4 zeigen weitere schaltungstechnische Einzelheiten.

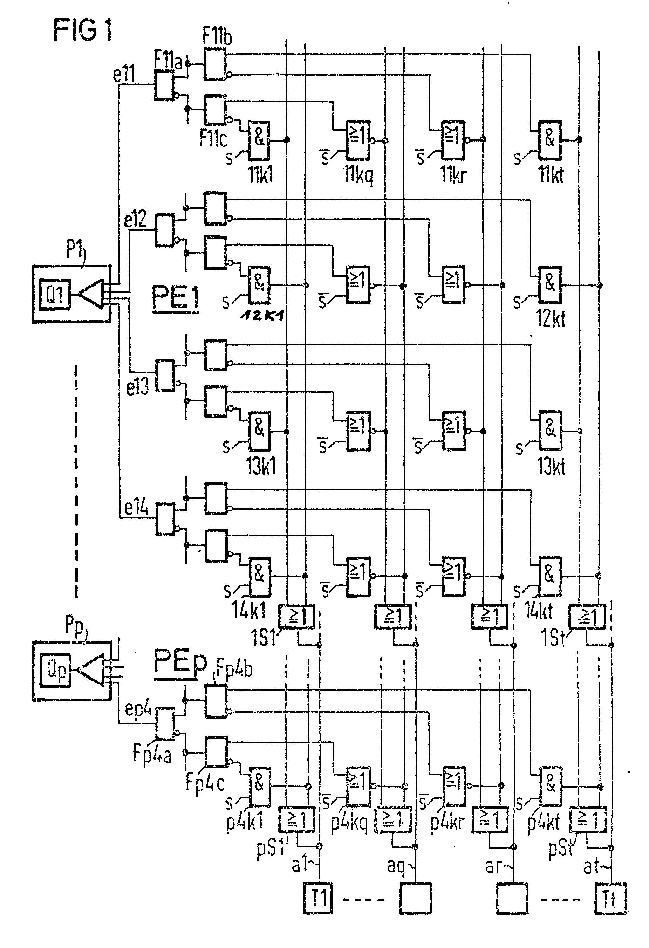

In der Zeichnung Fig. 1 ist schematisch in einem zum Verständnis der Erfindung erforderlichen Umfange ein Breitband-Vermittlungssystem mit einer Breitband-Koppelanordnung dargestellt, über die Breitbandsignalquellen P1 ... Pp, die insbesondere durch Fernsehprogrammquellen gegeben sein mögen, mit breitbandsignalempfangenden Teilnehmern T1, ..., Tt verbindbar sind; diese Teilnehmer mögen z. B. jeweils einem Wohnungsanschluß entsprechen, zu/von dem in der eingangs erläuterten Weise jeweils eine Mehrzahl von Kommunikationsmöglichkeiten gegeben sein mag.

Durch die Breitband-Koppelanordnung werden mit den vorzugsweise durch TV-Signale gegebenen Breitbandsignalen pulsmodulierte Signale vermittelt, wonach jeweils mehrere solche Signale im Zeitmultiplex vorzugsweise über einen Lichtwellenleiter zum jeweiligen Teilnehmer T1 . . . Tt übertragbar sind.

In dem Breitband-Vermittlungssystem nach Fig. 1 werden die Signale der einzelnen Signalquellen P1; . . . Pp in einer der Anzahl der gleichzeitig mit ein und demselben Teilnehmer T1, . . . Tt verbindbaren Signalquellen P1; . . . Pp entsprechenden Mehrzahl von zum Beispiel 4 Zeitkanälen eines zumindest diese Zeitkanäle umfassenden Zeitmultiplexsystems zeitkanalindividuellen Eingängen e11, e12, e13, e14; . . . ep4 in signalquellenindividuelle Koppelebenen PE1; . . . PEp der Breitband-Koppelanordnung zugeführt; in der Breitband-Koppelanordnung sind mit den einzelnen Eingängen e11, e12, e13, e14; . . . ep4 der einzelnen Koppelebenen PE1; . . . PEp verbundene Koppelpunktschalter 11k1 . . . 11kt, . . . 12kt, . . . 14kt; . . .; p4k1 . . . p4kt über jeweils teilnehmerindividuell eine Mehrzahl von Koppelpunktschaltern 11k1 . . . 14k1, . . ., 11kt . . . 14kt; . . .; p4k1, . . . p4kt zusammenfassende, durch Multiplex-Verknüpfungsglieder 1S1, . . ., 1St; . . .; pS1, . . . pSt gebildete Schwellwert-Multiplex-Schaltungen jeweils mit dem dem betreffenden Teilnehmer T1, . . . T1 zugehörigen Ausgang a1, . . . at der Breitband-Koppelanordnung verbunden.

Über die Koppelpunktschalter 11k1 . . . p4kt und die sie jeweils zusammenfassenden Multiplex-Verknüpfungsglieder sind somit die teilnehmerindividuellen Ausgänge a1 . . . at jeweils in teilnehmerindividuell (vorzugsweise über Teilnehmer-Rückkanäle, wie sie eingangs erwähnt wurden,) bestimmten Zeitkanälen eines Zeitmultiplexsystems mit einer jeweils gewünschten Signalquelle P1 . . . Pp verbindbar.

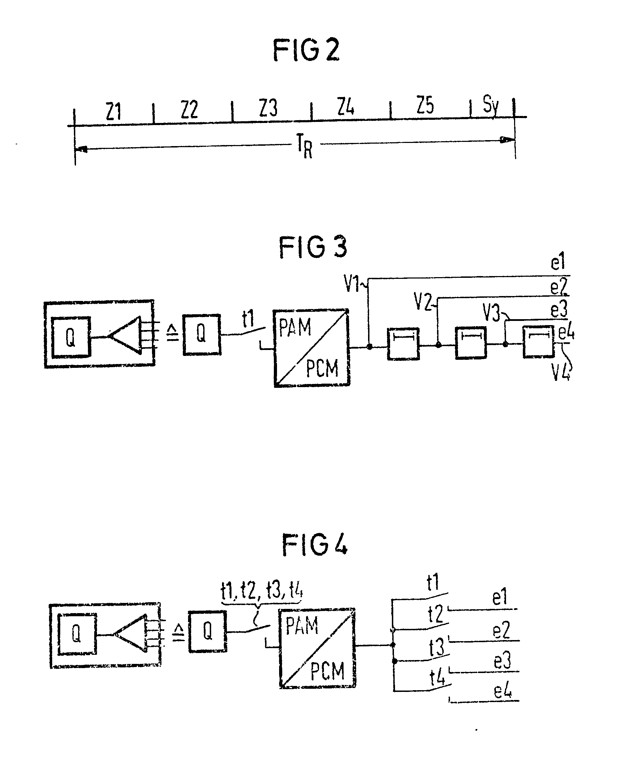

An dieser Stelle sei zunächst ein Blick auf die Zeichnung Fig. 2 geworfen, die die zeitliche Lage der Zeitfächer solcher Zeitkanäle in einem Zeitmultiplexrahmen $T_R$ verdeutlicht. Die Zeitfächer, genauer gesagt jeweils ein Zeitfach jedes Zeitkanals, sind dort mit Z1, Z2, Z3, Z4, Z5 bezeichnet; mit Sy ist ein Zeitfach eines ggf. vorgesehenen zusätzlichen Synchronisierkanals bezeichnet, in welchem ein Synchronisiersignal z. B. zur Synchronisation von teilnehmerseitigen Demultiplexern übertragen werden kann. In den einzelnen, vorzugsweise nach Maßgabe des jeweiligen Empfängers einer Mehrzahl von beim Teilnehmer vorgesehenen Empfängern bestimmten Zeitkanälen Z kann ein Teilnehmer T1 . . . Tt (in Fig. 1) über die jeweils in Frage kommenden Koppelpunktschalter 11k1, . . . p4kt (in Fig. 1) mit den einzelnen zeitkanalindividuellen Eingängen e11 . . . ep4 in die signalquellenindividuellen Koppelebenen PE1 . . . PEp (in Fig. 1) der Breitband-Koppelanordnung verbunden sein, wobei ein Teilnehmer ggf. auch in mehreren Zeitkanälen mit ein und derselben Signalquelle verbunden sein kann. Gegebenenfalls kann auch wenigstens einer der Zeitkanäle (beispielsweise Z5 in Fig. 2) von einer Vermittelbarkeit über die Breitband-Koppelanordnung ausgenommen sein, wie dies beispielsweise bei seiner Belegung mit einem 64-kbit/s-Einheitskanal eines integrierten Digital-Fernmeldenetzes und/oder UKW-Hörfunkprogrammen der Fall sein wird.

Die Signale der einzelnen Signalquellen P1 . . . Pp werden, wie schon gesagt, in einer der Anzahl der gleichzeitig mit ein und demselben Teilnehmer T (in Fig. 1) verbindbaren Signalquellen P entsprechenden Mehrzahl von Zeitkanälen Z des zumindest diese Zeitkanäle Z umfassenden Zeitmultiplexsystems den zeitkanalindividuellen Eingängen e11 . . . e14; . . . ep4 in die signalquellenindividuellen Koppelebenen PE1 . . . PEp der Breitband-Koppelanordnung zugeführt, beispielsweise in vier verschiedenen Zeitlagen Z1, Z2, Z3, Z4.

Hierzu kann, wie dies in Fig. 3 angedeutet ist, die eigentliche Signalquelle Q mit einer lediglich einem Zeitkanal Z (in Fig. 2) entsprechenden Abtastrate, d. h. wenigstens mit der durch das Shannonsche Theorem gegebenen Mindestabtastrate, mit einer Periode $T_R$ (in Fig. 2) wiederholt jeweils zu einem Zeitpunkt t1, beispielsweise rechtzeitig zum Anfang jedes Zeitfaches Z1, (in Fig. 2), abgetastet werden und der jeweilige Abtastwert in einem entsprechenden Umsetzer (z. B. PAM/PCM) in ein pulsmoduliertes Signal aus mehreren (PCM) oder einem (PPM, PFM, PDM) zweiwertigen Impuls(en) umgesetzt werden und das den jeweils erhaltenen Abtastwert darstellende pulsmodulierte Signal auf eine der genannten Mehrzahl der Zeitkanäle (Z1 . . . Z4) entsprechende Mehrzahl von Leitungspfaden V1, V2, V3, V4 aufgefächert werden, in denen Verzögerungen, die sich stufenweise jeweils um die Dauer eines Zeitfaches unterscheiden, stattfinden und die ausgangsseitig zu dem jeweils zugehörigen zeitkanalindividuellen Eingang (e1 . . . e4) der jeweiligen signalquellenindividuellen Koppelebene PE der Breitband-Koppelanordnung führen.

Statt dessen kann aber auch, wie dies in Fig. 4 angedeutet ist, die eigentliche Signalquelle (Q) mit einer der Mehrzahl von Zeitkanälen Z1 . . . Z4 entsprechenden größeren Häufigkeit in jeder Periode $T_R$ (in Fig. 2) zu mehreren Zeitpunkten t1, t2, t3, t4, beispielsweise rechtzeitig zu den Anfängen der Zeitfächer Z1, Z2, Z3, Z4 (in Fig. 2), abgetastet und der jeweils erhaltene Abtastwert in zweiwertige Pulssignale umgewandelt werden, wonach dann diese Pulse in den betreffenden Zeitfächern dem jeweils zugehörigen Eingang e1 . . . e4 der signalquellenindividuellen Koppelebene der Koppelanordnung zugeführt werden.

In beiden Fällen ist sichergestellt, daß jedes von einer Signalquelle abgegebene Breitbandsignal in jedem der Zeitkanäle in der signalquellenindividuellen Koppelebene PE der Breitband-Koppelanordnung verfügbar ist und dementsprechend über die jeweils in Frage kommenden Koppelpunktschalter zu den einzelnen Teilnehmern hin vermittelt werden kann.

Die Koppelpunktschalter 11k1, . . . p4kt sind durch vorzugsweise in ECL-Technik realisierte Verknüpfungsglieder gebildet, die dabei, ohne daß dies in der Zeichnung näher dargestellt ist, jeweils zu mehreren monolithisch integriert auf einen Chip zusammengefaßt sein mögen. Davon ausgehend, daß die einzelnen Breitbandsignalquellen P1 . . . Pp nicht zu niederohmig und nicht mit zu großen Schaltkapazitäten belastet werden dürfen, d. h. nicht durch eine beliebig große Anzahl von unmittelbar angeschlossenen Koppelpunktschaltern bzw. nachfolgenden Teilnehmern zu belasten sind, sind zur Auffächerung der einzelnen Eingänge e11 . . . ep4 der Breitband-Koppelanordnung auf die dem jeweiligen Eingang zugehörigen, zu den verschiedenen Ausgängen der Breitband-Koppelanordnung führenden Koppelpunktschalter ständig entriegelte ECL-Verknüpfungsglieder, beispielsweise des Typs 10101, mit einer Mehrzahl von Ausgängen ohne bzw. mit Negation vorgesehen. So ist z. B. in der Breitband-Koppelanordnung nach Fig. 1 mit hier angenommener zweistufiger Auffächerung der Eingang e11 über den nichtnegierenden Ausgang eines solchen Verknüpfungsgliedes F11a und den nichtnegierenden Ausgang eines weiteren Verknüpfungsgliedes F11b mit dem zum Ausgang at führenden Koppelpunktschalter 11kt verbunden, über den nichtnegierenden Ausgang des Verknüpfungsgliedes F11a und den negierenden Ausgang des weiteren Verknüpfungsgliedes F11b mit dem zum Ausgang ar führenden Koppelpunktschalter 11kr verbunden, über den negierenden Ausgang des Verknüpfungsgliedes F11a und den nichtnegierenden Ausgang eines weiteren Verknüpfungsgliedes F11c mit dem zur Ausgangsleitung aq führenden Koppelpunktschalter 11kq verbunden und über den negierenden Ausgang des Verknüpfungsgliedes F11a und den negierenden Ausgang des weiteren Verknüpfungsgliedes F11c mit dem zur Ausgangsleitung a1 führenden Koppelpunktschalter 11k1 verbunden. In entsprechender Weise ist der Eingang ep4 der Breitband-Koppelanordnung über Verknüpfungsglieder Fp4a, Fp4b, Fp4c mit ihrerseits ebenfalls zu den genannten Ausgängen at, ar, aq, a1 der Breitbandkoppelanordnung führenden Koppelpunktschaltern p4kt, p4kr, p4kq, p4k1 verbunden.

In diesem Zusammenhang ist zu bemerken, daß die genannten Verknüpfungsglieder F11a . . ., Fp4c grundsätzlich nur eine Eingangsleitung aufzuweisen brauchen und in der Zeichnung auch nur mit einer einzigen Eingangsleitung dargestellt sind, daneben aber auch noch wenigstens eine weitere Eingangsleitung haben können, von der/denen her sie dann durch Anschaltung eines entsprechenden Entriegelungssignals ständig entriegelt, d. h. für eine Signalübertragung über den in Fig. 1 dargestellten Breitbandsignalweg bereit sind.

Bei der beschriebenen Ausnutzung sowohl der Ausgänge ohne Negation als auch der Ausgänge mit Negation kann je nachdem, welcher Auffächerungsweg von einem Eingang der Breitband-Koppelanordnung zu einem bestimmten Koppelpunktschalter führt, ein durchzuschaltendes, vorzugsweise pulscode-(PC-) oder pulsphasen-(PP-)moduliertes Breitbandsignal auf diesem Wege eine — ggf. auch mehrfache — Negation erfahren haben oder nicht. Dabei wäre ggf. eine ungerade Anzahl von Negationen durch eine zusätzliche Negation zu kompensieren. Zweckmäßigerweise sind statt dessen jedoch, und dies zeigt auch Fig. 1, diejenigen Koppelpunktschalter, bei denen die Breitbandsignale in den genannten, den Koppelpunktschaltern in Kettenschaltung vorgeschalteten ECL-Verknüpfungsgliedern $2n-2$ Negationen (mit $n = 1, 2 . . .$) erfahren haben, einerseits und diejenigen Koppelpunktschalter, bei denen die Breitbandsignale in den genannten, den Koppelpunktschaltern in Kettenschaltung vorgeschalteten ECL-Verknüpfungsgliedern $2n-1$ Negationen (mit $n = 1, 2 . . .$) erfahren haben, andererseits durch ECL-Verknüpfungsglieder (UND, NOR) mit bezüglich der pulsmodulierten Breitbandsignale miteinander vertauschter Verknüpfungsfunktion gebildet. Dabei wird unter einer Vertauschung der Verknüpfungsfunktion bezüglich der pulsmodulierten Breitbandsignale eine Vertauschung der beiden Werte der den Breitbandsignalen entsprechenden Eingangsvariablen in der Wahrheits- bzw. Arbeitstabelle der Verknüpfungsglieder verstanden. So sind in der Koppelanordnung nach Fig. 1 die Koppelpunktschalter 11kt . . . p4k1 und 11kt . . . p4kt, bei denen die Breitbandsignale auf dem Weg vom Eingang e11 bzw. ep4 her keine bzw. zwei Negationen erfahren haben, durch UND-Glieder beispielsweise des Typs 10104 gebildet; die Koppelpunktschalter 11kq . . . p4kq und 11kr . . . p4kr, bei denen die Breitbandsignale auf dem Weg vom Eingang e11 . . . ep4 her eine Negation (bzw. eine ungeradzahlige Anzahl von Negationen) erfahren haben, sind dagegen durch NOR-Glieder beispielsweise des Typs 10102 gebildet. Bei einer solchen Realisierung mit UND- und NOR-Gliedern sind übrigens die Verknüpfungsfunktionen nicht nur bezüglich der pulsmodulierten Breitbandsignale miteinander vertauscht, sondern auch bezüglich der den Koppelpunktschaltern über ihre Ansteuerleitungen zuzuführenden Steuersignale, was bedeutet, daß den Steuereingängen s der durch NOR-Glieder gebildeten Koppelpunktschalter die Steuersignale negiert zuzuführen sind.

Die Ansteuerleitungen s bzw. s̄ der Koppelpunktschalter 11k1 . . . p4kt können, ohne daß dies in Fig. 1 näher dargestellt wäre, mit den einzelnen Ausgängen eines jeweils einer Reihe von Koppelpunktschaltern, z. B. den Koppelpunktschaltern 11kt . . . p4kt, zugeordneten Ansteuerdecoders verbunden sein, von dem her die einzelnen Koppelpunktschalter durch entsprechend zugeführte, für die gesamte Zeit der Durchschaltung bestehenbleibende Steuersignale jeweils leitend gemacht werden können.

Wie aus Fig. 1 ersichtlich ist, führen in dem Breitband-Vermittlungssystem nach Fig. 1 die Koppelpunktschalter 11k1 . . . 14k1, über die die zeitkanalindividuellen Eingänge e11 . . . e14 der der Breitband-Signalquelle P1 zugeordneten Koppelebene PE1 mit der zum Teilnehmer T1 führenden Ausgangsleitung a1 verbindbar sind, nicht direkt zu dieser Ausgangsleitung a1, son-

dern über ein die Koppelpunktschalter 11k1 . . . 14k1 zusammenfassendes Multiplex-Verknüpfungsglied 1S1; des weiteren ist in Fig. 1 angedeutet, daß auch die mit den zeitkanalindividuellen Eingängen . . . ep4 der der Breitband-Signalquelle Pp zugeordneten Koppelebene PEp verbundenen Koppelpunktschalter . . . p4k1 nicht direkt, sondern über ein Multiplex-Verknüpfungsglied pS1 zu der Ausgangsleitung a1 führen. In entsprechender Weise sind die mit den zeitkanalindividuellen Eingängen e11 . . . e14 der Koppelebene PE1 verbundenen Koppelpunktschalter 11kt . . . 14kt über ein nachfolgendes, diese Koppelpunktschalter zusammenfassendes Multiplex-Verknüpfungsglied 1St mit der dem Teilnehmer Tt zugehörigen Ausgangsleitung at verbunden; die mit den zeitkanalindividuellen Eingängen . . . ep4 der Koppelebene PEp verbundenen Koppelpunktschalter p4kt führen über ein Multiplex-Verknüpfungsglied pSt zur Ausgangsleitung at. Die Multiplex-Verknüpfungsglieder 1S1 . . . pSt sind dabei zweckmäßigerweise ebenfalls in ECL-Technik realisiert; in Fig. 1 ist angedeutet, daß die die Schwellwert-Multiplex-Schaltungen bildenden Multiplex-Verknüpfungsglieder durch ODER-Glieder gebildet sein können.

Dabei sind nur solche Koppelpunktschalter an ein und denselben Eingang eines Multiplex-Verknüpfungsgliedes angeschlossen, die eingangsseitig mit in der Reihenfolge der zugehörigen Zeitkanäle nicht unmittelbar benachbarten Eingängen der Breitband-Koppelanordnung verbunden sind. So sind an einunddenselben (linken) Eingang des Multiplex-Verknüpfungsgliedes 1S1 nur die mit den zeitkanalindividuellen Eingängen e11 bzw. e13 verbundenen und damit z. B. den nicht unmittelbar benachbarten Zeitkanälen Z1 und Z3 (in Fig. 2) zugeordneten Koppelpunktschalter 11k1 und 13k1 angeschlossen; an einen anderen (rechten) Eingang des Multiplex-Verknüpfungsgliedes 1S1 sind nur die mit den zeitkanalindividuellen Eingängen e12 bzw. e14 verbundenen und damit z. B. den Zeitkanälen Z2 und Z4 (in Fig. 2) zugeordneten Koppelpunktschalter 12k1 und 14k1 angeschlossen.

In entsprechender Weise sind an den einen (linken) Eingang des Multiplex-Verknüpfungsgliedes 1St die Koppelpunktschalter 11kt und 13kt angeschlossen, die mit den den Zeitkanälen Z1 und Z3 (in Fig. 2) zugeordneten Eingängen e11 und e13 verbunden sind, während zu dem anderen (rechten) Eingang des Multiplex-Verknüpfungsgliedes 1St die beiden Koppelpunktschalter 12kt und 14kt führen, die eingangsseitig mit den den Zeitkanälen Z2 und Z4 (in Fig. 2) zugeordneten Eingängen e12 und e14 der Koppelebene PE1 verbunden sind.

Soll nun ein bestimmter Teilnehmer, beispielsweise der Teilnehmer Tt, ein bestimmtes Breitbandsignal, beispielsweise das von der Signalquelle Pp abgegebene Breitbandsignal, in einem bestimmten Zeitkanal, beispielsweise im Zeitkanal Z4, nicht empfangen und ist daher der gewissermaßen am Kreuzungspunkt von zeitkanalindividueller Eingangsleitung ep4 in die signalquellenindividuelle Koppelebene PEp und teilnehmerindividueller Ausgangsleitung at liegende Koppelpunktschalter p4kt von seiner Ansteuerleitung s her gesperrt, so gelangt das mit dem genannten Breitbandsignal pulsmodulierte Signal im Zeitkanal Z4 nur noch als um die Sperrdämpfung des Koppelpunktschalters p4kt von (bei einem ECL-Koppelpunktschalter) etwa 40 dB abgeschwächte »Störwelligkeit« an den Eingang des Multiplex-Verknüpfungsglieds pSt. Aufgrund der ihm inhärenten Amplitudentscheidungsschwelle stellt nun das Multiplex-Verknüpfungsglied pSt entsprechend seiner Übertragungscharakteristik eine von dieser »Störwelligkeit« nicht zu überschreitende Signalschwelle dar, so daß das bereits durch den Koppelpunktschalter p4kt gesperrte Signal durch das Multiplex-Verknüpfungsglied pSt eine weitere Sperrdämpfung — bei einem ECL-Multiplex-Verknüpfungsglied um weitere 40 dB — erfährt. Die somit im Beispiel auf den doppelten Wert von 80 dB erhöhte resultierende Sperrdämpfung bringt eine entsprechende Unterdrückung eines räumlichen Nebensprechens in dem betreffenden Zeitkanal Z4 mit sich, in welchem dem gerade betrachteten Teilnehmer Tt beispielsweise über den Koppelpunktschalter 14kt das von der Signalquelle P1 gelieferte Breitbandsignal zugeführt wird. Entsprechendes gilt, ohne daß es hier näher ausgeführt werden muß, auch für alle übrigen Kombinationen gesperrter Koppelpunktschalter und Multiplex-Verknüpfungsglieder; jegliche störende Nebensprecherscheinungen zwischen Übertragungskanälen gleicher Zeitlage sind somit sicher vermieden.

Zugleich wird aber auch ein zeitliches Nebensprechen zwischen gleiche Koppelfeldabschnitte benutzenden Übertragungskanälen benachbarter Zeitlagen unterdrückt: Wird etwa dem Teilnehmer Tt beispielsweise über den Koppelpunktschalter 12kt im Zeitkanal Z2 (in Fig. 2) das von der Signalquelle P1 abgegebene Breitbandsignal zugeführt, so gelangen mit den im Zeitkanal Z2 übertragenen Signalimpulsen zusammenhängende, im nachfolgenden Zeitkanal Z3 (in Fig. 2) auftretende Nachlaufimpulse zu demselben Eingang des dem Koppelpunktschalter 12kt nachfolgenden Multiplex-Verknüpfungsgliedes 1St, an den auch der Koppelpunktschalter 12kt, nicht aber auch ein in eben dem nachfolgenden Zeitkanal Z3 durchschaltender Koppelpunktschalter angeschlossen ist; der in diesem nachfolgenden Zeitkanal Z3 durchschaltende Koppelpunktschalter 13kt ist vielmehr an den anderen Eingang des Multiplex-Verknüpfungsgliedes 1St angeschlossen. Auch das Nachlaufsignal hätte daher am Multiplex-Verknüpfungsglied pSt eine diesem inhärente Ansprechschwelle zu überwinden, wofür das Nachlaufsignal aber zu schwach ist; auch hier sind somit störende Nebensprecherscheinungen vermieden.

Abschließend sei noch bemerkt, daß die in dem Breitband-Vermittlungssystem gemäß der Erfindung erst am Ausgang der Breitband-Koppelanordnung vorgesehene Zeitmultiplex-Zusammenfassung von Breitbandsignalen benachbarter Zeitkanäle besonders bei Verwendung monolithisch-hochintegrierter Koppelreihen oder Koppelvielfache von Vorteil ist, bei denen keine Möglichkeit eines Eingriffes in die eigentliche Koppelanordnung besteht.

**Patentansprüche**

1. Breitband-Vermittlungssystem zum wahlweisen Verbinden von Breitbandsignalquellen, insbesondere TV-Programmquellen, mit breitbandsignalempfangenden Teilnehmern über eine Breitband-Koppelanordnung mit Koppelpunktschaltkreisen insbesondere in ECL-Technik, über die die Breitbandsignale insbesondere TV-Signale, als pulsmodulierte Signale übertragen werden, dadurch gekennzeichnet, daß die Signale der einzelnen Signalquellen (P1 ... Pp) in einer der Anzahl (4) der gleichzeitig mit ein und demselben Teilnehmer (T1 ... Tt) verbindbaren Signalquellen (P1 ... Pp) entsprechenden Mehrzahl von Zeitkanälen (Z1 ... Z4) eines zumindest diese Zeitkanäle (Z1 ... Z4) umfassenden Zeitmultiplexsystems zeitkanalindividuellen Eingängen (e11, ... e14) in signalquellenindividuelle Koppelebenen (PE1 ... PEp) der Breitband-Koppelanordnung zugeführt werden und in der Breitband-Koppelanordnung die eingangsseitig mit den einzelnen Eingängen (e11, ... e14) der einzelnen Koppelebenen (PE1 ... PEp) verbundenen Koppelpunktschalter (11kt, 12kt, ... p4kt) ausgangsseitig über jeweils teilnehmerindividuell eine Mehrzahl von Koppelpunktschaltern (11kt, ... 14kt) einer Koppelebene zusammenfassende Schwellwert-Multiplex-Schaltungen (1St, ... pSt) mit von an einem Koppelpunktschalter (11kt ... 14kt) gesperrten Signalen nicht überschreitbarem Schwellwert jeweils mit dem dem betreffenden Teilnehmer (Tt) zugehörigen Ausgang (at) der Breitband-Koppelanordnung verbunden sind.

2. Breitband-Vermittlungssystem nach Anspruch 1, dadurch gekennzeichnet, daß die Signalquelle (Q) mit einer der Mehrzahl von Zeitkanälen (Z) entsprechenden Häufigkeit abgetastet wird und die die Abtastwerte darstellenden pulsmodulierten Signale jeweils dem zugehörigen zeitkanalindividuellen Eingang (e11 ... e14) der jeweiligen Koppelebene (PE1) zugeführt werden.

3. Breitband-Vermittlungssystem nach Anspruch 1, dadurch gekennzeichnet, daß die Signalquelle (Q) mit einer lediglich einem Zeitkanal (Z) entsprechenden Abtastrate abgetastet wird und das den jeweils erhaltenen Abtastwert darstellende pulsmodulierte Signal auf eine der Mehrzahl der Zeitkanäle (Z) entsprechende Mehrzahl von Leitungspfaden (V) aufgefächert wird, in denen sich stufenweise jeweils um die Dauer eines Zeitfaches unterscheidende Verzögerungen stattfinden und die ausgangsseitig zu dem jeweils zugehörigen zeitkanalindividuellen Eingang (e) der Koppelebene führen (Fig. 3).

4. Breitband-Vermittlungssystem nach einem der Ansprüche 1 bis 3, dadurch gekennzeichnet, daß die Schwellwert-Multiplex-Schaltungen durch Multiplex-Verknüpfungsglieder (1S1 ... pSt) gebildet sind.

5. Breitband-Vermittlungssystem nach einem der Ansprüche 1 bis 3, dadurch gekennzeichnet, daß die Schwellwert-Multiplex-Schaltungen durch den Koppelpunktschaltern nachgeschaltete, ausgangsseitig vielfachgeschaltete Schwellwertschalter gebildet sind.

6. Breitband-Vermittlungssystem nach einem der Ansprüche 1 bis 5, dadurch gekennzeichnet, daß allenfalls solche zu ein und demselben teilnehmerindividuellen Ausgang (at) der Breitband-Koppelanordnung führende Koppelpunktschalter (11kt, 13kt), die eingangsseitig mit in der Reihenfolge der zugehörigen Zeitkanäle (Z1 ... Z4) nicht unmittelbar benachbarten Eingängen (e11, e13) der Breitband-Koppelanordnung verbunden sind, mit ein und demselben Eingang einer Schwellwert-Multiplex-Schaltung (1St) verbunden sind.

7. Breitband-Vermittlungssystem nach einem der Ansprüche 1 bis 6, dadurch gekennzeichnet, daß sowohl die Koppelpunktschalter (11kt, ... p4kt) als auch die Schwellwert-Multiplex-Schaltungen (1St, ... pSt) in ECL-Technik realisiert sind.

8. Breitband-Vermittlungssystem nach einem der Ansprüche 1 bis 7, dadurch gekennzeichnet, daß zur Verbindung der einzelnen Eingänge (e11 ... ep4) der Breitband-Koppelanordnung mit den dem jeweiligen Eingang (e11) zugehörigen, zu den verschiedenen Ausgängen (a1 ... aq, ar ... at) der Breitband-Koppelanordnung führenden Koppelpunktschaltern (11k1 ... 11kq, 11kr ... 11kt) ständig entriegelte ECL-Verknüpfungsglieder (F11a, F11b, F11c) mit einer Mehrzahl von Ausgängen vorgesehen sind, wobei Koppelpunktschalter (11k1; 11kt), bei denen die Breitbandsignale in den genannten, den Koppelpunktschaltern (11k1; 11kt) in Kettenschaltung vorgeschalteten ECL-Verknüpfungsgliedern (F11a, F11c; F11a, F11b) 2n−2 Negationen (mit n = 1, 2, ...) erfahren haben, einerseits und Koppelpunktschalter (11kq; 11kr), bei denen die Breitbandsignale in den genannten, den Koppelpunktschaltern (11kq; 11kr) in Kettenschaltung vorgeschalteten ECL-Verknüpfungsgliedern (F11a, F11c; F11a, F11b) 2n−1 Negationen (mit n = 1, 2, ...) erfahren haben, andererseits durch ECL-Verknüpfungsglieder (UND, NOR) mit bezüglich der pulsmodulierten Breitbandsignale miteinander vertauschter Verknüpfungsfunktion gebildet sind.

9. Breitband-Vermittlungssystem nach Anspruch 8, dadurch gekennzeichnet, daß die Koppelpunktschalter durch UND-Glieder und durch NOR-Glieder gebildet sind.

**Claims**

1. A wide-band switching system for selectively connecting wide-band signal sources, in particular TV-programme sources, to wide-band signal-receiving subscribers by a wide-band coupling arrangement with coupling point switching circuits, in particular by ECL technology, the wide-band signals, in particular TV-signals, being transmitted as pulse-modulated signals, characterised in that the signals of the individual signal sources (P1 . . . Pp) are fed to time-channel specific inputs (e11 . . . e14) in signal-source specific coupling planes (PE1 . . . PEp) of the wide-band coupling arrangement in a plurality of time channels (Z1 . . . Z4) of a time multiplex system, which comprises at least these time channels (Z1 . . . Z4), which plurality corresponds to the number (4) of the signal sources (P1 . . . Pp), which can be simultaneously connected to one and the same subscriber (T1 . . . Tt), and that in the wide-band coupling arrangement the coupling point switches (11kt, 12kt . . . p4kt) which are connected at the input end to the individual inputs (e11 . . . e14) of the individual coupling planes (PE1 . . . PEp) are respectively connected at the output end by threshold multiplex circuits (1St . . . pSt) to the output (at) of the wide-band coupling arrangement assigned to the respective subscriber (Tt), which threshold multiplex circuit (1St . . . pSt) respectively combine a plurality of coupling point switches (11kt . . . 14kt) of a coupling plane in subscriber individual fashion and which have a threshold value which cannot be exceeded by signals blocked at a coupling point switch (11kt . . . 14kt).

2. A wide-band switching system as claimed in Claim 1, characterised in that the signal source (Q) is sampled at a frequency which corresponds to the plurality of time channels (Z), and the pulse-modulated signals which represent sampled values, are respectively fed to the assigned time-channel specific input (e11 . . . e14) of the respective coupling plane (PE1).

3. A wide-band switching system as claimed in Claim 1, characterised in that the signal source (Q) is sampled at a sampling rate which corresponds to only one time channel (Z), and the pulse-modulated signal which represents the respectively received sample value, are fanned to a plurality of line paths (V), which corresponds to the plurality of time channel (Z), in which line paths respective delays occur which differ from one another stepwise by the duration of a time slot, and which line paths lead to the respectively assigned time-channel specific input (e) of the coupling plane at the output end (Fig. 3).

4. A wide-band switching system as claimed in one of Claims 1 to 3, characterised in that the threshold value multiplex circuits are formed by multiplex logic elements (1S1 . . . pSt).

5. A wide-band switching system as claimed in one of Claims 1 to 3, characterised in that the threshold multiplex circuits are formed by threshold value switches connected following the coupling point switches and connected in multiple at the output end.

6. A wide-band switching system as claimed in one of Claims 1 to 5, characterised in that at the most such coupling point switches (11kt, 13kt), which lead to one and the same individual subscriber output (at) of the wide-band coupling arrangement (11kt, 13kt) and which at the input end are connected to inputs (e11, e13) of the wide-band coupling arrangement which are not directly adjacent in the sequence of the assigned time channels (Z1 . . . Z4), are connected to one and the same input of a threshold value multiplex circuit (1St).

7. A wide-band switching system as claimed in one of Claims 1 to 6, characterised in that both the coupling point switches (11kt . . . p4kt) and the threshold value multiplex circuits (1St . . . pSt) are realized in ECL technology.

8. A wide-band switching system as claimed in one of Claims 1 to 7, characterised in that in order to connect the individual inputs (e11 . . . ep4) of the wide-band coupling arrangement to the coupling point switches (11k1 . . . 11kq, 11kr . . . 11kt), which are assigned to the respective input (e11) and lead to the different outputs (a1 . . . aq, ar . . . at) of the wide-band coupling arrangement, there are provided permanently unlocked ECL-logic elements (F11a, F11b, F11c) having a plurality of outputs, where coupling point switches (11k1; 11kt), where the wide-band signals have undergone $2n-2$ negations ($n=1, 2$ . . .) in said ECL-logic elements (F11a, F11c; F11a, F11b) which precede the coupling point switches (11k1; 11kt) in a cascade circuit, on the on hand, and coupling point switches (11kq; 11kr) where the wide-band signals have undergone $2n-1$ negations ($n=1, 2, . . .$) in said ECL-logic elements (F11a, F11c; F11a, F11b) which precede the coupling point switches (11kq; 11kr) in a cascade circuit, on the other hand, are formed by ECL-logic elements (UND, NOR) with a mutually exchanged logic function in respect of the pulse-modulated wide-band signals.

9. A wide-band switching system as claimed in Claim 8, characterised in that the coupling point switches are formed by AND-elements and NOR-elements.

## Revendications

1. Système de commutation à large bande servant à relier au choix des sources de signaux à large bande, notamment des sources de programmes de télévision, à des abonnés recevant des signaux de télévision à large bande, par l'intermédiaire d'un dispositif de couplage à large bande comportant des circuits de points de couplages réalisés notamment selon la technique ECL et par l'intermédiaire desquels les signaux à large bande, notamment des signaux de télévision, sont transmis sous la forme de signaux à modulation d'impulsions, caractérisé par le fait que les signaux des différentes sources de signaux (P1 . . . Pp) sont envoyés à des entrées (e11, . . . e14) prévues individuellement pour les différents canaux temporels, dans des plans de couplage (PE1 ... PEp), prévus individuellement pour les différentes sources de signaux, du dispositif de couplage à large bande, dans une multiplicité, correspondant au nombre (4) des sources de signaux (P1 ... Pp) pouvant être reliés à un même abonné (T1 ... Tt), de canaux temporels (Z1 ... Z4) d'un système de multiplexage temporel comportant au moins ces canaux temporels (Z1 ... Z4), et que dans le dispositif de couplage à large bande, les commutateurs des points de couplage (11kt, 12kt, ... p4kt), qui sont reliés du côté entrée aux différentes entrées (e11, ... e14) des différents plans de couplage (PE1 ... PEp), sont reliés, sur le côté sortie, par l'intermédiaire de circuits de multiplexage à valeur de seuil (1St, ... Pst), englobant, de façon individuelle pour les différents abonnés, une multiplicité de commutateurs de points de couplage (11kt, ... 14kt) d'un plan de couplage et possédant une valeur de consigne ne pouvant pas être dépassée par des signaux bloqués au niveau d'un commutateur de point de couplage (11kt ... 14kt), respectivement à la sortie (at), associée à l'abonné considéré (Tt), du dispositif de couplage à large bande.

2. Système de commutation à large bande selon la revendication 1, caractérisé par le fait que la source de signaux (Q) est explorée avec une fréquence correspondant à la multiplicité de canaux temporels (Z) et que les signaux à modulation d'impulsions, représentant les valeurs d'exploration, sont envoyés aux différentes entrées associés (e11 ... e14), prévues individuellement pour les différents canaux temporels, du plan de couplage (PE1) considéré.

3. Système de commutation à large bande selon la revendication 1, caractérisé par le fait que la source des signaux (Q) est explorée avec une fréquence de balayage correspondant uniquement à un canal temporel (Z) et que le signal à modulation d'impulsions, représentant la valeur d'exploration respectivement obtenue, est réparti dans une multiplicité, correspondant à la multiplicité des canaux temporels (Z), de voies de transmission (V) dans lesquelles apparaissent des retards se différenciant par paliers respectivement de la durée d'un créneau temporel, et qui aboutissent, sur le côté sortie, à l'entrée (e) respectivement associée, prévue individuellement pour chaque canal temporel, du plan de couplage (Figure 3).

4. Système de commutation à large bande suivant l'une des revendications 1 à 3, caractérisé par le fait que les circuits de multiplexage à valeur de seuil sont formés par des circuits logiques de multiplexage.

5. Système de commutation à large bande suivant l'une des revendications 1 à 3, caractérisé par le fait que les circuits de multiplexage à valeur de seuil sont formés par des commutateurs à valeur de seuil branchés en aval des commutateurs de points de couplage et connectés sous la forme d'un multiple sur le côté sortie.

6. Système de commutation à large bande suivant l'une des revendications 1 à 5, caractérisé par le fait que dans tous les cas les commutateurs de points de couplage (11kt, 13kt), qui aboutissent à une même sortie (at) propre à un abonné, du dispositif de couplage à large bande et qui, du côté entrée, sont reliés aux entrées (e11, e13) du dispositif de couplage à large bande, non directement voisines dans la succession des canaux temporels associés (Z1 ... Z4), sont reliés à une même entrée d'un circuit de multiplexage à valeur de seuil (1St).

7. Système de commutation à large bande suivant l'une des revendications 1 à 6, caractérisé par le fait qu'aussi bien les commutateurs des points de couplage (11kt, ... p4kt), que les circuits de multiplexage à valeur de seuil (11kt, ... p4kt) sont réalisés selon la technique ECL.

8. Système de commutation à large bande suivant l'une des revendications 1 à 7, caractérisé par le fait que pour relier les différentes entrées (e11 ... ep4) du dispositif de couplage à large bande les commutateurs de points de couplage (11k1 ... 11kq, 11kr ... 11kt) associés à l'entrée respective (e11) et aboutissant aux différentes sorties (a1 ... aq, ar, ... af) du dispositif de couplage à large bande, il est prévu des circuits logiques ECL (F11a, F11b, F11c) en permanence débloqués et qui comportent une multiplicité de sorties, auquel cas, d'une part les commutateurs de points de couplage (11k1; 11kt), pour lesquels les signaux à large bande ont subi $2n-2$ inversions (avec $n = 1, 2, ...$) dans lesdits circuits logiques ECL (F11a, F11c; F11a, F11b) branchés en amont des commutateurs de points de couplage (11k1; 11kt) selon un circuit itératif, les commutateurs des points de couplage (11kq; 11kf), pour lesquels les signaux à large bande ont subi $1n-1$ inversions (avec $n = 1, 2, ...$) dans lesdits circuits logiques ECL (F11a, F11c; F11a, F11b) branchés en amont des commutateurs de points de couplage (11kq; 11kr) selon un circuit itératif, sont formés par les circuits logiques ECL (ET NON-OU) possédant des fonctions de combinaison logique permutées entre elles en rapport avec les signaux à large bande à modulation d'impulsions.

9. Système de commutation à large bande selon la revendication 8, caractérisé par le fait que les commutateurs de points de couplage sont formés par des circuits ET et par des circuits NON-OU.

FIG 1

# FIG 2

Z1 | Z2 | Z3 | Z4 | Z5 | Sy

$T_R$

# FIG 3

# FIG 4